Europäisches Patentamt

European Patent Office

Office européen des brevets

(11) Publication number: **0 445 640 A2**

# EUROPEAN PATENT APPLICATION

(21) Application number: 91102901.5

(51) Int. Cl.5: **G06F 15/20**

(22) Date of filing: 28.02.91

(30) Priority: **09.03.90 US 491410**

(43) Date of publication of application:
**11.09.91 Bulletin 91/37**

(84) Designated Contracting States:
**DE FR GB IT**

(71) Applicant: **International Business Machines Corporation
Old Orchard Road
Armonk, N.Y. 10504(US)**

(72) Inventor: **Kurtzberg, Jerome Marvin
2303 Mark Road
Yorktown Heights, N.Y. 10598(US)**
Inventor: **Levanoni, Menachem
623 Giordano Drive
Yorktown Heights, N.Y. 10598(US)**

(74) Representative: **Herzog, Friedrich Joachim, Dipl.-Ing.
IBM Deutschland GmbH Schönaicher Strasse 220
W-7030 Böblingen(DE)**

(54) Computer integrated manufacturing.

(57) An on-line, real-time computer integrated manufacturing system employs statistical analysis and mathematical techniques with feedback-and-forward information for global control and optimization for a comprehensive, generic system for modeling, monitoring, controlling and optimizing manufacturing, from a single process to a complete factory.

FIG. 1

The present invention relates to a comprehensive, generic system for modeling, monitoring, controlling and optimizing manufacturing, from a simple process to a complete factory. Specifically, the invention is intended to improve production with an on-line, real-time system that employs statistical analysis and mathematical techniques with feedback-and-forward information for global control and optimization. Process performance and product quality are emphasized. The invention results in a flexible, adaptive and reliable control system.

In the present invention, manufacturing is considered as a hierarchy of processes which are modeled, controlled and optimized via three interacting networks (the A, B, C nets). All manufacturing processes, from simple process steps through manufacturing sectors and lines, to complete factories, are treated identically, thereby simplifying computational complexity. A minimal set of parameters is thereby obtained at any manufacturing level, which reduces a complex manufacturing process to a manageable form. Responses of lower level processes in the hierarchy are normal process variables at the current level. Process models are developed and updated via on-line data analysis, and are used to evaluate process status and improvement path.

The system provides answers to the following questions, concerning manufacturing performance, which can be asked at any time and at any level: Where are we now? Where did we aim? Where really should we be? How do we get there?

The system incorporates other measures of performance, not normally used in on-line control. These are "quality" (Q-Factor), "cost" and "value-add" which are tracked at every manufacturing step and are used to derive the final measure of "profit". The Q-Factor is a general measure and can be applied to product and process variables and responses at any level.

The system partitions its logical structure into three interacting nets, the A, B, and C nets. These are the Application, Control, and Optimization Nets, respectively. The functions of these nets and their functional operation are described hereinbelow.

The A-Net represents manufacturing process flow, where nodes denote processes and edges describe product flow. It models the application, explicitly defining the manufacturing process to be controlled and optimized in terms of process parameters and target specifications. it is a non-uniform hierarchical net in which a node may represent a simple process step or a complex process defined by its own A-Net. This net is application dependent.

The B-Net represents process control, where nodes denote control operations and edges specify control parameters flow. It evaluates information from the A-Net to tune the process as close as possible to its current targets, and modifies the control parameters in the A-Net. This net is application independent.

The C-Net represents process optimization, where nodes denote target (manufacturing specifications) adjustment operations and edges specify target specification flow. The C-Net processes information from the A-Net, and adjusts target parameters in the A-Net to improve overall production performance. This net is application independent.

A principal object of the present invention is therefore, the provision of a system for modeling, monitoring, controlling and optimizing manufacturing.

Another object of the invention is the provision of an on-line, real-time system employing statistical analysis and mathematical technique with feedback-and-forward information for global operations and optimization.

Further objects of the present invention will become more clearly apparent when the following description is read in conjunction with the accompanying drawings.

These objects are solved basically by the solution given in the independent claim 1.

Further advantageous embodiments of the present invention are laid down in the subclaims.

The invention will be shown in more detail in the following description in accordance with the drawing in which embodiments are shown and in which:

FIG. 1 is a schematic representation of a processing network of the type envisioned by the present invention;

FIG. 2 is a flow diagram of the operation of the network shown in FIG. 1;

FIG. 3 is a graphical representation of a response contour map;

FIG. 4 is a graphical representation of a response surface map;

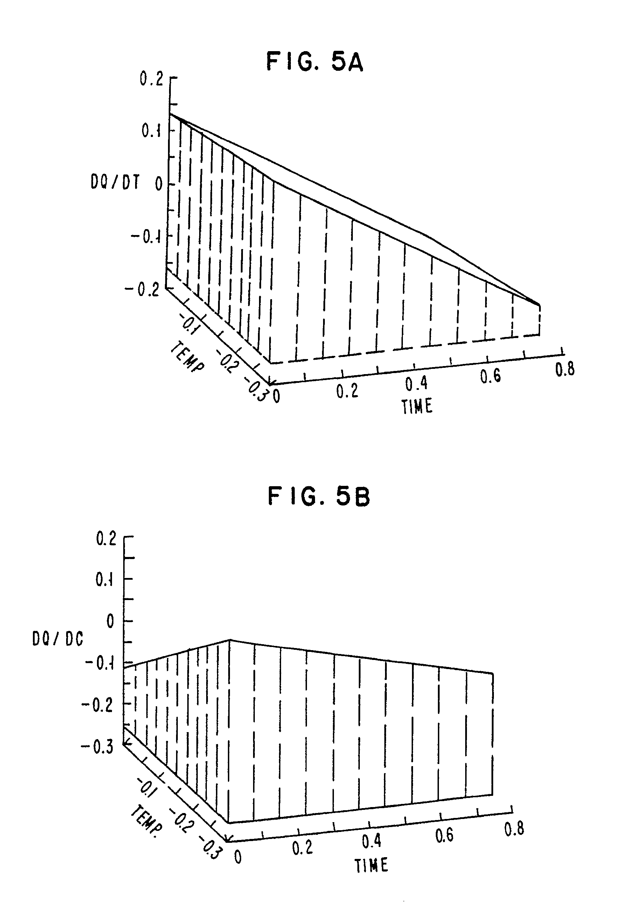

FIGS. 5A and 5B are graphical representation of process sensitivity maps;

FIG. 6 is a list of the steps involved in data acquisition and preparation of the data for subsequent analysis by the system;

FIG. 7 is a list of the steps involved in data evaluation and model testing performed by the B-net;

FIG. 8 is a list of the steps involved in improvement analysis for determining subsequent course of action by the B-net;

FIG. 9 is a list of the steps involved in secondary analysis of the data for model update;

FIG. 10 is a list of the steps involved in equipment set and update; and

FIG. 11 is a list of the steps involved in process set and update.

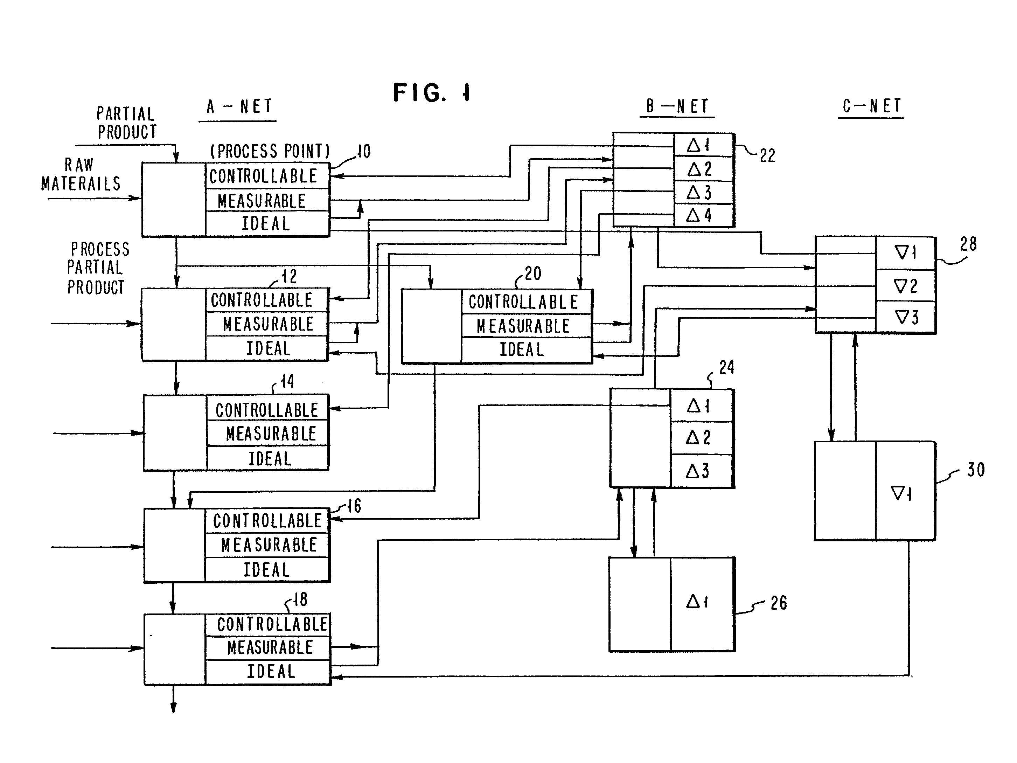

Referring now to the FIGURES and to FIG. 1 in particular, there is shown generalized A, B and C nets and their interconnection.

The system maintains all manufacturing models via the A-net representing steps, sectors, manufacturing lines, equipment, partial and complete products, etc., shown as models 10, 12, 14, 16, 18 and 20. While there are shown six such models, it will be understood that the quantity of models will be more or less depending upon the manufacturing operation to be monitored and controlled. Each model has as inputs, the inputs necessary for performing the modelled operation or process. For example, the input to a model 10 are raw materials and a partial product from another process to be operated upon in accordance with the process described by model 10. The inputs to the other models are similar. For convenience, the term process is employed even though the A-net models all relevant manufacturing elements. Although equipment and processes are treated the same (both have inputs, outputs and models), they are managed via separate models by the system to enable separation of effects of the manufacturing processes from the tools which implement them. Thus, the contributions of tools and actual processes to any manufacturing operation are automatically identified even though they are combined for a total process model.

Process models are treated stochastically, with the values of model parameters being the updated items. The models themselves may be analytic, with given functional forms, or empirical, in which case second order (or higher) multivariate polynomial forms are used. Time-evolution models, which may be highly non-linear, are used in forecasting process behavior and are based on standard time-series analysis techniques (e.g. autoregression), or empirically developed models if possible.

Process variables are classified into four basic types: Measurable, Controllable, Ideal and Fundamental. The Measurable variables are parameters obtained from direct measurements. Controllable variables are parameters which directly control the process. Ideal variables are parameters which define nominal manufacturing targets (specifications). Fundamental variables are parameters derived from basic physical laws that characterize the physical process or product and are used to reduce the computation load and for generating data from models which do not have measurable variables.

In an ion implantation process, for example, measurable variables are capacitance and sheet resistance; controllable variables are energy and dose of implant; an ideal variables is voltage threshold; and fundamental variables are charge distribution parameters.

The system builds the simplest possible model which correctly describes process behavior. Consequently, the system ranks, automatically, contributions of variables to process models, and uses the smallest set of process variables which explain process behavior within a given confidence level. These are the primary variables. All other variables are stored in a secondary variable set for possible future transfer to the primary set, if needed. As processes change in time, significant secondary variables are automatically transferred to the primary set, by the system, and insignificant Primary Variables are transferred to the secondary set.

The system normally updates process models using "business-as-usual" data from the floor. This means minimum interference with manufacturing operations. At times, these data are insufficient to produce statistically significant results and more drastic action is required. In such cases, the system goes into an experimental design mode and requests a series of measurements to enable proper updating of the model.

In many manufacturing processes, data required for real-time analysis are not available when needed (e.g. off-line measurements). In these cases, the system generates required data from the current model. The system then updates that model when model data are available.

The system provides trend and forecasting analysis. These are used in prediction of process behavior, warnings, messages, etc., and are displayed via control charts.

The system implements its architecture via a network of loosely coupled workstations, to provide load sharing and high reliability. This means that there need not be dedicated workstations in the system. Instead, the workload is controlled by a dynamic task management system which evaluates load requirements, processors capacities and status, and, optimally, assigns tasks to workstations. This approach results in an adaptable (environment changes), flexible (upgradable) system.

The system control employs the concepts of control tasks with master/slaves combination, in which a "dying" master is automatically replaced by a backup master (former slave). The system monitors itself continuously. Task assignments for load sharing are of the two-stage class whereby an initial global assignment is derived first, followed by dynamic adjustment which reflects recent changes.

The system maintains its own summary databases which are designed for speed and ease of access. The approach is to use small and flexible databases with fast response for on-line operation. These databases are updated normally by on-line information, but also by information available from off-line sources. These databases contain historical process information which includes data summary, process performance measures, specifications and models as well as problems history. Raw data are stored off-line for future audit, but are not normally referenced by the system.

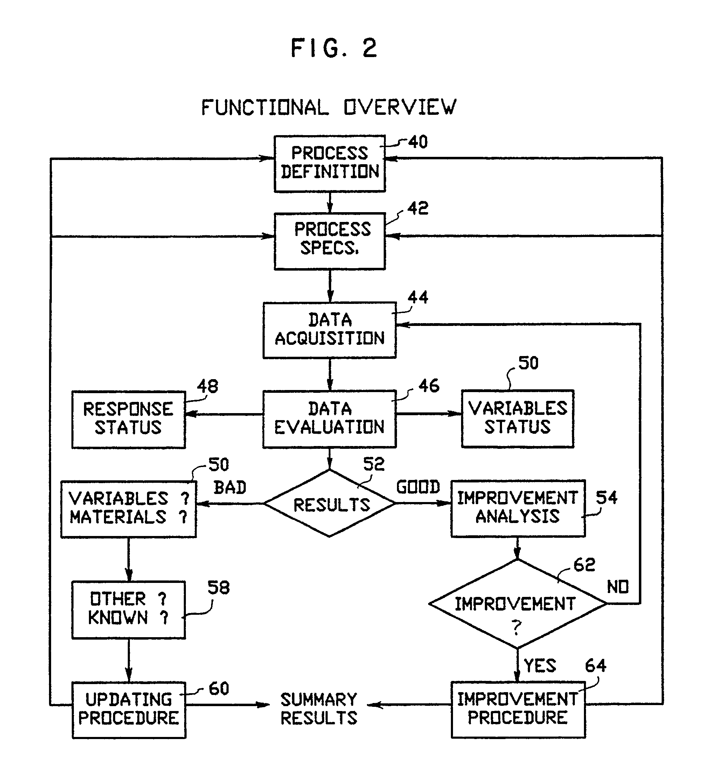

During each cycle of operation, the system goes through several steps, by the A, B and C nets, which insure proper operation. Each cycle begins with acquisition of new data and ends with possible adjustment of control and ideal parameters and update of appropriate databases which store the complete history and status of the process. These steps are described below and a flowchart of the functional operation is shown in FIG. 2.

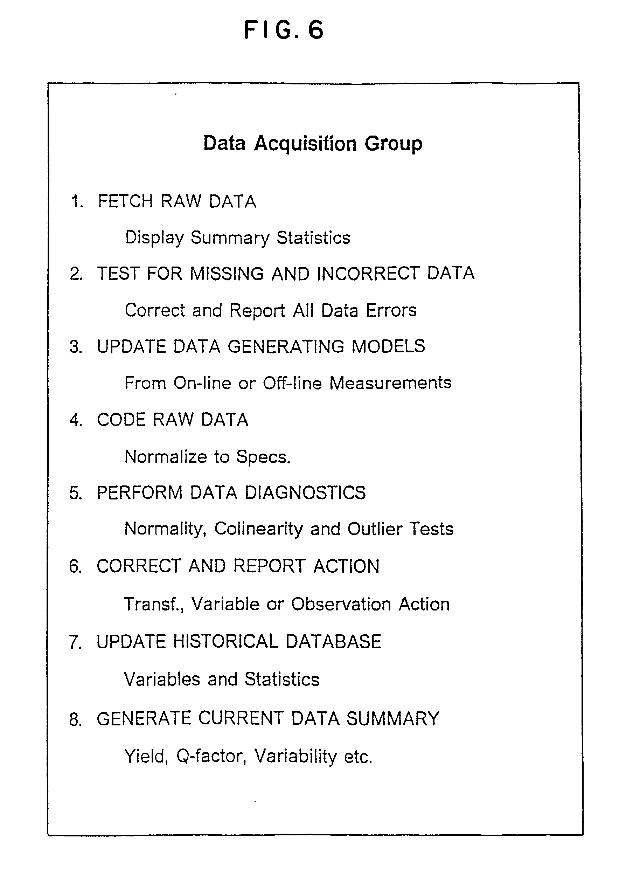

Data acquisition and preparation, steps 40, 42 and 44 prepares data for subsequent analysis by the system. The function is to insure data reliability and to code data for use. Observations with incomplete or incorrect data are eliminated, outliers are deleted and colinear variables are removed. Data distribution tests are performed to determine need for transformations to exhibit proper statistical properties (e.g. taking logarithms to approach a Normal distribution). Variables data are coded in dimensionless form as deviations from targets, in units of tolerances, for subsequent analysis, so that variables can be directly compared regardless of their natural scale of units. FIG. 6 lists the major operations performed at steps 40, 42 and 44. At the conclusion of these steps, there is high confidence in the data used by the system for process evaluation.

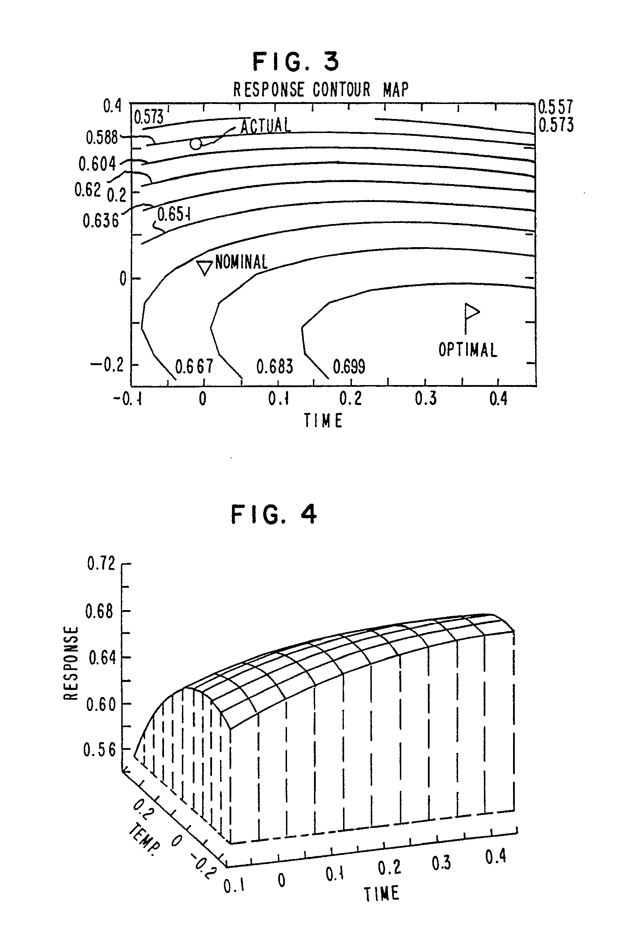

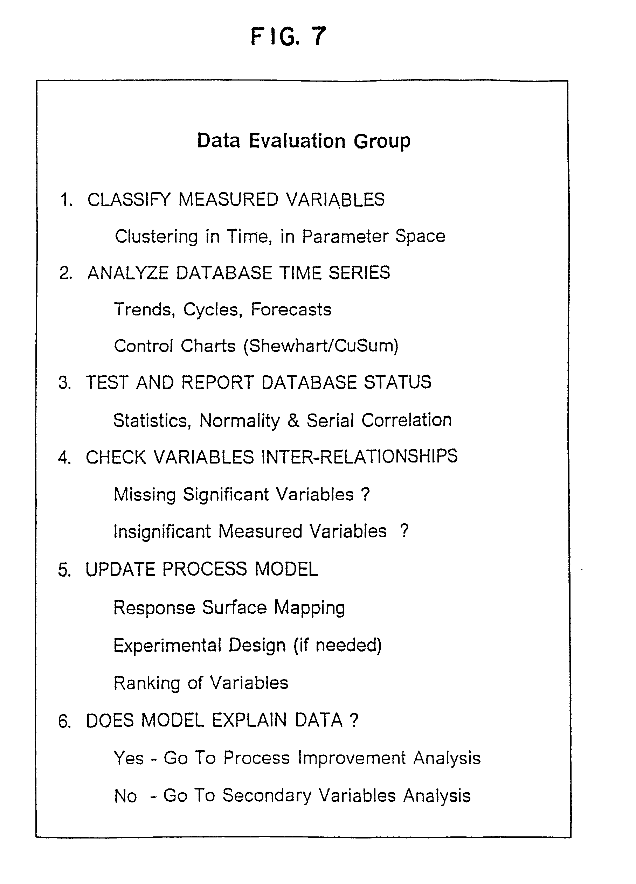

Data evaluation and model test step 46, performed by the B net performs all required analysis for evaluation of process behavior in terms of response status 48 and variable status 50. Cluster analysis is used to identify the set of observations that reflect the current process behavior, ie, are homogeneous in process performance. Process trends, cycles and forecast are computed using time-series analysis techniques. Correlation analysis is performed to detect missing primary variables and insignificant model parameters. Process models are developed or updated, and their validity tested. For empirical models, data are regressed on second order multivariate polynomial forms to generate process response surface. Regression analysis also obtains response surface for analytic models. A graphical representation of a response surface map of an actual two-parameter process (silicon oxidation process with time and temperature as control variables and oxide thickness as a measurable variable, ie, process response) is shown in FIG. 4. FIG. 7 lists the major operations performed at step 46.

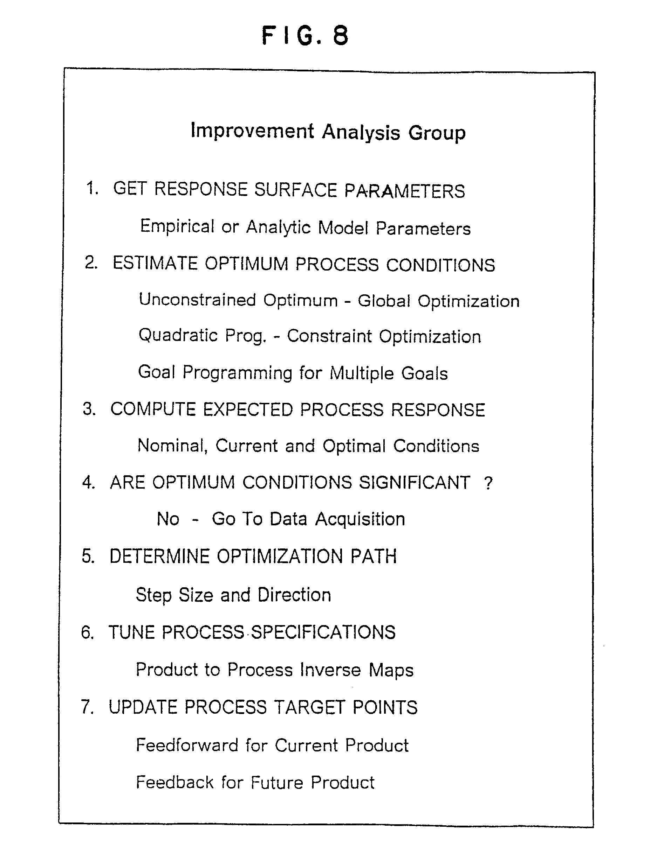

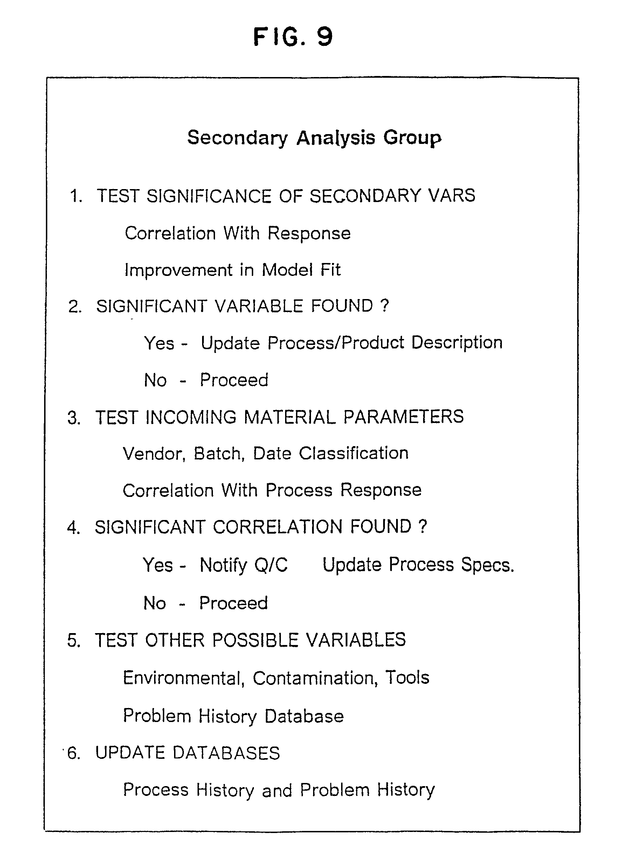

Based on analysis results 52, the system determines subsequent course of action by the B-net. This action may be Improvement Analysis 54, if models are consistent with data, or Secondary Analysis 56, if important parameters are missing. If analysis is inconclusive, the system requests additional data in step 58 as well as design of experiments on all independent process variables which do not exhibit sufficient variability, required for model update in step 60. FIG. 8 lists the major operations performed during improvement analysis step 54. FIG. 9 lists the major operation performed during secondary analysis. At the conclusion of this step there is high confidence in the recommended subsequent action. If data and models are consistent, the system investigates potential improvement in step 64. Otherwise, additional data acquisition is performed at step 44, Optimum conditions based on process response surface maps are derived, their statistical significance evaluated, and the cost of making process changes are compared with the incremental gain in value and net profit of the product. Feedback and feedforward information from process external to the one being controlled are taken into account, and subsequent course of action is determined by cost-to-profit ratio assuming statistical significance. Expected process response under minimal, current, and optimum conditions are computed as well as optimization path to affect process improvement.

Specifically, the B-net, shown symbolically as processes 22, 24 and 26, uses the updated model form the previous step to determine the actual process state ("where you are") and nominal process state ("where you aimed") and if the difference is significant, changes the settings of the controllable variables in the A-net to enable the process to approach its nominal state. The C-net, shown symbolically as processors 28 and 30, in turn, uses the same model to determine the process optimum state ("where you should be") and minimal state ("where you aimed") and if the difference is significant, alerts manufacturing personnel that additional improvement is possible via changes in current specifications. Upon authorization, the C-net changes the nominal specification in the A-net so that the process approaches its optimum.

The adjustment of the controllable variables (by the B-net) and the ideal variables (by the C-net) to improve the process, compensates not only for perturbations of the current process, but also for the ill effects of other manufacturing processes, thereby minimizing the need for product rework. Feedback (for future product) and feedforward (for current product) provide the necessary mechanism to do so.

The adjustment of process variables in a multilevel process is performed recursively, as composite function, starting from an initial measurable parameter and terminating in controllable at the elementary level. This means that independent variables of one level are the dependent variables at the previous level, etc., until the elementary controllable variables are adjusted.

The nominal, actual and optimum process conditions are shown in FIG. 6 and the major operations performed at this step are shown in FIG. 8. At the conclusion of this step, the controllable variables settings (under B-net control) and the ideal variables settings (under C-net control) are updated as described below.

If the new data do not correlate well with the model (as defined by the current process behavior), the system examines secondary variables for possible model improvement. This means that the correlations between secondary variables and process response are evaluated by the B net as well as the secondary variables contributions to the model's multiple correlation coefficient, and are automatically transferred into the primary set if the significance threshold is exceeded. Similarly, primary variables which re found to be insignificant are eliminated form the process model and are transferred to the secondary set for possible future incorporation in the model. A problems database of nonstandard conditions exists for subsequent interrogation.

At the conclusion of this step, the primary variables set and the secondary variables set are updated, reflecting the latest changes in process models and specifications, as described in Equipment/Process update section, and appropriate warnings are sent to manufacturing personnel. FIG. 9 shows the major operations performed at this step.

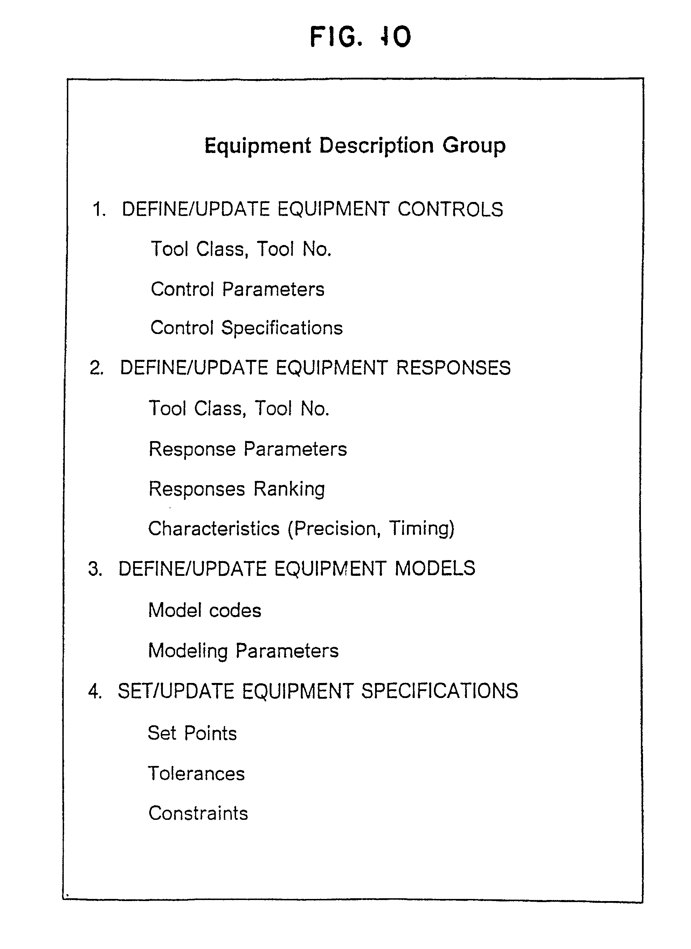

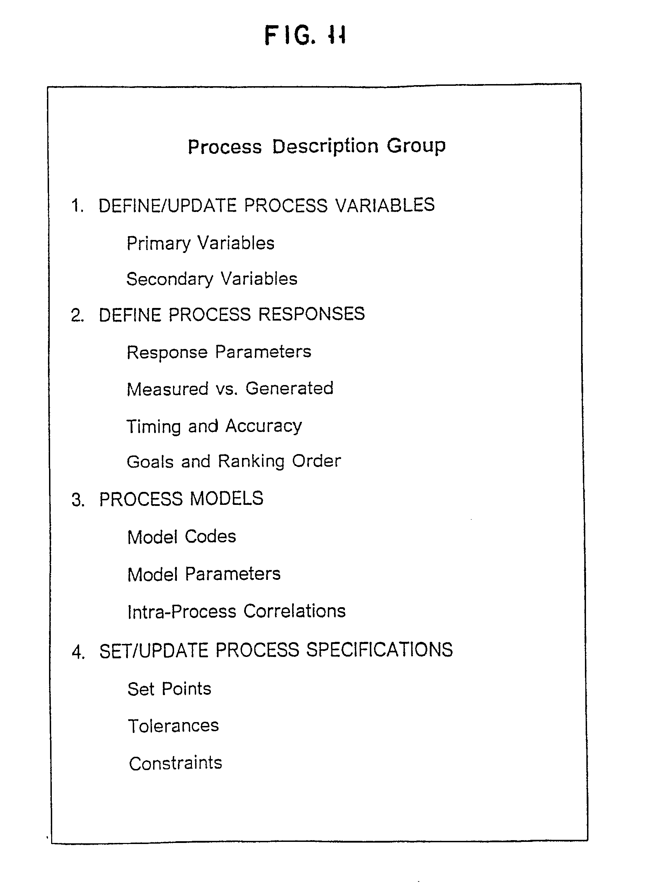

All changes and modifications, produced by the system during its cycle operation, are reflected by the update of the appropriate process parameters. This may be an updated model due to recent data, model modifications due to Secondary Analysis, or adjustment of setpoints resulting form Improvement Analysis. Initially, the process is described by the user. Equipment models are treated in a similar fashion except that they do not have a secondary variables set and are restricted to the manufacturer set of parameters. FIGS. 10 and 11 list the major operations performed at this step. At the conclusion of this step, equipment and process models are updated to reflect the current knowledge of the process.

When faced with a new application, the system requires a systematic approach to bringing it up to full capacity. A sequence of phases which achieve that goal is described below.

A complete flow-chart of the application, including all inputs, outputs and measurements and related information is prepared. Based on this, an A-net is constructed so that the application is defined fully, uniquely and unambiguously in proper format.

The generic B-net and C-net are implemented on the application and linked to the A-net. Thus, A-net information is available to the B and C nets for evaluation, control and optimization. All process and system parameters, required for operation, are initialized. These include setpoints, tolerances, constraints, model types and timing information which are used in data acquisition and analysis. Variables are grouped into primary and secondary sets while responses are ranked in terms of their importance to the application.

Initially, the system operates as a "silent partner." This means that the process runs without any intervention by system (i.e. business-as-usual) for a period of time. During that period, system acquires data, evaluates it and builds all necessary models as well as appropriate databases.

In the second phase the system operates as a "consultant". This means that the process still runs in a business-as-usual mode, but now the system provides predictions and improvement suggestions. These are closely monitored by process personnel who compare the system predictions to actual results. Any discrepancies between predicted and actual results are investigated, their causes determined and corrective action is taken.

Finally, the system gets full control of the process. This is done sequentially so that the lowest process in the hierarchy is converted to automated mode first, followed by the next hierarchical level, and so on until the complete process is fully automated. At each of these sequential steps, satisfactory performance is verified.

The first two phases can be implemented using the system as an off-line tool. The final phase requires the system to operate on-line and real-time for monitoring, control and optimization.

## Claims

1. A computer integrated manufacturing system for modeling, controlling and optimizing a manufacturing process comprising:

   first network means (A) for modeling a manufacturing process having at least one control variable;

   second network means (B) for controlling the manufacturing process coupled to said first network means (A) for adjusting said at least one control variable in said first network means; and

   third network means (C) for controlling process optimization coupled to said first network means (A) for optimizing said at least one control variable in said first network.

2. A system as set forth in Claim 1 wherein said first network means (A), said second network means (B) and said third network means (C) form a hierarchy of processes which are to be modeled, controlled and optimized.

3. A system as set forth in Claim 1 or 2 wherein said first network means (A) includes a minimal stochastic model representation of the manufacturing process.

4. A system as set forth in Claim 1, 2 or 3 wherein all of said at least one control variable are adaptively ranked by contribution to the manufacturing process.

5. A system as set forth in Claim 1, 2, 3 or 4 wherein optimization of the manufacturing process is on a local and a global basis.

6. A system as set forth in any one of the Claim 1 to 5 wherein the manufacturing process is real-time adjusted responsive to the current state of the process.

7. A system as set forth in any one of the Claim 1 to 6 wherein said first network means (A) is time varying.

8. A system as set forth in any one of the Claim 1 to 7 wherein adjustment of said at least one control variable by said second network means (B) is by feed forward adjustment.

9. A system as set forth in any one of the Claim 1 to 8 wherein said first network means (A) is continuously verified and updated.

10. A system as set forth in any one of the Claim 1 to 9 wherein said second network means (B) performs real-time manufacturing process state evaluation.

FIG. 1

EP 0 445 640 A2

# FIG. 2

## FUNCTIONAL OVERVIEW

# FIG. 3

RESPONSE CONTOUR MAP

# FIG. 4

# FIG. 5A

# FIG. 5B

# FIG. 6

### Data Acquisition Group

1. FETCH RAW DATA

   Display Summary Statistics

2. TEST FOR MISSING AND INCORRECT DATA

   Correct and Report All Data Errors

3. UPDATE DATA GENERATING MODELS

   From On-line or Off-line Measurements

4. CODE RAW DATA

   Normalize to Specs.

5. PERFORM DATA DIAGNOSTICS

   Normality, Colinearity and Outlier Tests

6. CORRECT AND REPORT ACTION

   Transf., Variable or Observation Action

7. UPDATE HISTORICAL DATABASE

   Variables and Statistics

8. GENERATE CURRENT DATA SUMMARY

   Yield, Q-factor, Variability etc.

# FIG. 7

## Data Evaluation Group

1. CLASSIFY MEASURED VARIABLES

   Clustering in Time, in Parameter Space

2. ANALYZE DATABASE TIME SERIES

   Trends, Cycles, Forecasts

   Control Charts (Shewhart/CuSum)

3. TEST AND REPORT DATABASE STATUS

   Statistics, Normality & Serial Correlation

4. CHECK VARIABLES INTER-RELATIONSHIPS

   Missing Significant Variables ?

   Insignificant Measured Variables  ?

5. UPDATE PROCESS MODEL

   Response Surface Mapping

   Experimental Design (if needed)

   Ranking of Variables

6. DOES MODEL EXPLAIN DATA ?

   Yes - Go To Process Improvement Analysis

   No  - Go To Secondary Variables Analysis

# FIG. 8

## Improvement Analysis Group

1. GET RESPONSE SURFACE PARAMETERS

   Empirical or Analytic Model Parameters

2. ESTIMATE OPTIMUM PROCESS CONDITIONS

   Unconstrained Optimum - Global Optimization

   Quadratic Prog. - Constraint Optimization

   Goal Programming for Multiple Goals

3. COMPUTE EXPECTED PROCESS RESPONSE

   Nominal, Current and Optimal Conditions

4. ARE OPTIMUM CONDITIONS SIGNIFICANT ?

   No - Go To Data Acquisition

5. DETERMINE OPTIMIZATION PATH

   Step Size and Direction

6. TUNE PROCESS SPECIFICATIONS

   Product to Process Inverse Maps

7. UPDATE PROCESS TARGET POINTS

   Feedforward for Current Product

   Feedback for Future Product

# FIG. 9

## Secondary Analysis Group

1. TEST SIGNIFICANCE OF SECONDARY VARS

     Correlation With Response

     Improvement in Model Fit

2. SIGNIFICANT VARIABLE FOUND ?

          Yes -  Update Process/Product Description

          No  -  Proceed

3. TEST INCOMING MATERIAL PARAMETERS

     Vendor, Batch, Date Classification

     Correlation With Process Response

4. SIGNIFICANT CORRELATION FOUND ?

          Yes -  Notify Q/C     Update Process Specs.

          No  -  Proceed

5. TEST OTHER POSSIBLE VARIABLES

     Environmental, Contamination, Tools

     Problem History Database

6. UPDATE DATABASES

     Process History and Problem History

# FIG. 10

## Equipment Description Group

1. DEFINE/UPDATE EQUIPMENT CONTROLS

   Tool Class, Tool No.

   Control Parameters

   Control Specifications

2. DEFINE/UPDATE EQUIPMENT RESPONSES

   Tool Class, Tool No.

   Response Parameters

   Responses Ranking

   Characteristics (Precision, Timing)

3. DEFINE/UPDATE EQUIPMENT MODELS

   Model codes

   Modeling Parameters

4. SET/UPDATE EQUIPMENT SPECIFICATIONS

   Set Points

   Tolerances

   Constraints

# FIG. 11

**Process Description Group**

1. DEFINE/UPDATE PROCESS VARIABLES

    Primary Variables

    Secondary Variables

2. DEFINE PROCESS RESPONSES

    Response Parameters

    Measured vs. Generated

    Timing and Accuracy

    Goals and Ranking Order

3. PROCESS MODELS

    Model Codes

    Model Parameters

    Intra-Process Correlations

4. SET/UPDATE PROCESS SPECIFICATIONS

    Set Points

    Tolerances

    Constraints